# EUROPÄISCHE PATENTSCHRIFT

(11) **EP 0 701 910 B1**
(45) Veröffentlichungstag und Bekanntmachung des Hinweises auf die Patenterteilung: **16.06.1999**
(21) Anmeldenummer: 95111385.1
(22) Anmeldetag: 20.07.1995
(51) Int. Cl.: B60B 1/08, B60B 1/06

(54) **Rad**
Wheel
Roue

(30) Priorität: 27.08.1994 DE 4430489
(43) Veröffentlichungstag der Anmeldung: 20.03.1996
(73) Patentinhaber: Dr.Ing.h.c. F. Porsche Aktiengesellschaft, 70435 Stuttgart (DE)
(72) Erfinder: Stach, Jens, D-71735 Eberdingen (DE)

(56) Entgegenhaltungen:
- EP-A- 0 552 436
- DE-A- 4 138 558
- DE-A- 4 201 838
- DE-C- 430 425
- DE-U- 8 711 424
- US-A- 1 540 414
- US-A- 1 558 656
- US-A- 1 602 512

## Beschreibung

Die Erfindung bezieht sich auf ein Rad nach dem Oberbegriff des Anspruchs 1.

Aus der DE-41 38 558 C2 ist ein Rad mit einem mehrere Speichen umfassenden Radstern bekannt, der über eine Schweißung mit einem Felgenring verbunden ist. Der Radstern umfaßt Hohlspeichen und ist über eine Reibschweißung mit dem Felgenring fest verbunden. Hierzu weist der Radstern an der Innenseite mindestens zwei als Schweißringe umlaufende ebene Flächen auf. Diese sind korrespondierend zu weiteren gegenüberstehenden ebenen Schweißringen des Felgenringes angeordnet. Die Schweißringe sind auf verschiedenen Durchmessern angeordnet.

Desweiteren ist aus der DE-42 01 838 A1 eine Weiterentwicklung des bekannten Rades beschrieben, das innerhalb der Hohlspeiche jeweils eine Rippe aufweist.

Aufgabe der Erfindung ist es, ein Rad mit einem Hohlrippen aufweisenden gegossenen Radstern zu schaffen, der neben einem geringen Gewicht eine optimale Festigkeit aufweist und eine einfache Entfernung des Sandkernes nach einem Guß ermöglicht.

Diese Aufgabe wird erfindungsgemäß durch die kennzeichnenden Merkmale des Anspruchs 1 gelöst. Weitere vorteilhafte Merkmale beinhalten die Unteransprüche.

Durch die Erfindung wird in vorteilhafter Weise ein gegossener Radstern geschaffen, der Hohlspeichen mit Verstärkungen umfaßt und welcher einerseits maximalen Festigkeitsanforderungen genügt und andererseits ein schnelles und einfaches Entfernen des Sandkernes aus den Hohlspeichen nach einem Guß gewährleistet.

Die Ausbildung der Hohlspeichen mit an die Schraubenlochhülsen (Kalorien) des Rades angegossenen Rippen und von in den Hohlspeichen in bestimmter örtlicher Anordnung vorgesehenen Verstärkungselementen in Form von zylindrischen Zapfen oder auch von Zapfen anderer geometrischer Querschnittsformen, ergibt solche Zwischenräume zu den Seitenwänden und Stirnflächen der Hohlspeiche, daß der Sandkern ohne Schwierigkeiten herausfallen bzw. ausgeblasen oder sonstwie entfernt werden kann.

Es sind im Bereich der inneren Kernöffnungen der Hohlspeichen zwei oder mehrere zylindrische Zapfen angeordnet. Sie erstrecken sich vorzugsweise parallel zur Radachse und sind beabstandet zueinander. Vorzugsweise ist eine Anordnung der Zapfen zu beiden Seiten einer durch die Versteifungsrippe gelegten Radquerebene vorgesehen. Die Anordnung von nur einem Zapfen in der Radquerebene ist auch möglich. Diese Zapfen sind radial ungefähr auf gleichem Durchmesser wie der innere Schweißring angeordnet.

Zur gewichtsmäßig leichteren Gestaltung des Rades sind die Verstärkungsrippen sowie die Schraubenlochhülsen von relativ geringer Wandstärke und in etwa gleich dick ausgeführt. Ebenso sind die Zapfen von einem geringen Durchmesser, damit genügend Raum zum einfachen Entfernen des Kernsandes bleibt.

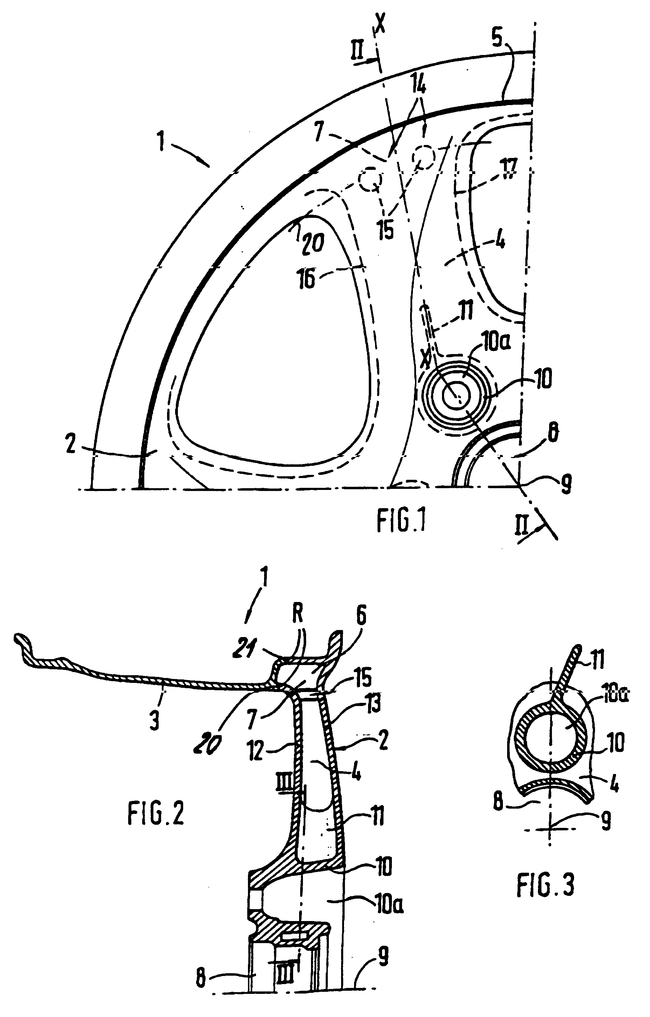

Ein Ausführungsbeispiel der Erfindung ist in der Zeichnung dargestellt und wird im folgenden näher beschrieben.
Es zeigen
- Fig. 1: ein Rad, bestehend aus einem Radstern mit verbundenem Felgenring,
- Fig. 2: einen Schnitt durch eine Hohlspeiche mit Verstärkungsrippe, zylindrischen Verstärkungszapfen, und
- Fig. 3: einen Schnitt nach der Linie III-III der Fig. 2 durch die Schraubenlochhülse mit angeformter Verstärkungsrippe.

Das Rad 1 besteht im wesentlichen aus einem Radstern 2, mit dem ein Felgenring 3 über eine Schweißung, insbesondere über eine Reibschweißung R, verbunden ist. Die Speichen 4 des Radsterns 2 sind hohl ausgeführt und weisen zum äußeren Rand 5 eine in einen Ringkanal 6 mündende Kernöffnung 7 auf.

In der Speiche 4 ist konzentrisch zur zentrischen Radöffnung 8 mit der Radachse 9 eine Schraubenlochhülse 10 eingegossen, an die sich eine radial erstreckende Rippe 11 anschließt. Diese Verstärkungsrippe 11 ist in einer Radquerebene X-X angeordnet und stützt die beiden gegenüberliegenden Stirnwandflächen 12 und 13 der Hohlspeiche 4 gegeneinander ab.

Ausgangsseitig der Hohlspeiche 4 in der Mündungsöffnung 7 sind Verstärkungselemente 14 in Form von zylindrischen Zapfen 15 oder dergleichen angeordnet. Diese erstrecken sich parallel zur Radachse 9 und sind mit der Stirnwandfläche 12 und 13 der Hohlspeiche 1 einstückig gegossen.

Die Zapfen 15 sind vorzugsweise beidseitig einer durch die Rippe 11 gelegten Radmittenquerebene X-X angeordnet, so daß sie beabstandet zueinander sind und zu den seitlichen Wandungen 16, 17 einen weiteren Abstand aufweisen.

Die Schraubenlochhülse sowie die Rippe sind dünnwandig ausgeführt und weisen in etwa eine gleiche Wanddicke auf. Die zylindrischen Zapfen sind mit einem geringstmöglichen Durchmesser versehen, damit der Sandkern aus der Öffnung heraus entfernt werden kann.

Die Zapfen 15 sind etwa auf dem Durchmesser des inneren Schweißringes 20 der Reibschweißung R angeordnet, die ergänzt wird durch einen im Durchmesser größeren Schweißring 21.

## Patentansprüche

1. Rad (1) mit einem mehrere Hohlspeichen (4) umfassenden gegossenen Radstern (2), der über eine Schweißung, insbesondere eine Reibschweißung, mit einem Felgenring (3) verbunden ist und die Hohlspeichen (4) im Bereich des Außenumfangs Kernöffnungen (7) für einen Sandkern aufweisen und die Öffnungen dem Felgenring zugerichtet sind, **dadurch gekennzeichnet**, daß der Radstern (2) zu einer zentrischen Radöffnung (8) konzentrisch angeordnete Schraubenbohrungen (10a) aufweist, die mit etwa mittig innerhalb der Hohlspeiche (4) eingegossenen Bohrungshülsen (10) mit radial verlaufenden Verstärkungsrippen (11) versehen sind und der Radstern (2) im Bereich der Kernöffnungen (7) mindestens ein Verstärkungselement (14) zwischen gegenüberliegenden Wandungen (16, 17) jeder Hohlspeiche (4) besitzt.

2. Rad nach Anspruch 1, **dadurch gekennzeichnet**, daß das Verstärkungselement (14) jeweils aus zwei zylindrisch gegossenen Zapfen (15) besteht, die parallel zur Radachse (9) verlaufen und mit Abstand zueinander angeordnet sind und beidseitig zu einer durch die Verstärkungsrippe (11) vorgegebenen Radquerebene (X-X) liegen.

3. Rad nach den Ansprüchen 1 oder 2, **dadurch gekennzeichnet**, daß zwischen den die Hohlrippen (4) seitlich begrenzenden Wandungen (16, 17) und den Zapfen (15) jeweils ein Abstand vorgesehen ist.

4. Rad nach den Ansprüchen 1, 2 oder 3, **dadurch gekennzeichnet**, daß die Verstärkungsrippen (11) und die Bohrungshülsen (10) eine gleiche Wandstärke aufweisen und sich die Rippen (11) annähernd über 1/3 der Länge der Hohlspeichen (4) erstrecken.

5. Rad nach Anspruch 1, **dadurch gekennzeichnet**, daß die Zapfen (15) etwa auf dem Durchmesser des inneren Schweißringes (20) angeordnet sind.

## Claims

1. A wheel (1) having a cast wheel centre member (2) comprising a plurality of hollow spokes (4) and connected to a rim ring (3) by way of a weld, in particular a friction weld, and the hollow spokes (4) are provided in the region of the outer periphery with openings (7) for a sand core and the openings are directed towards the rim ring, **characterized in that** the wheel centre member (2) is provided with bolt bores (10a) arranged concentrically with respect to a central wheel opening (8) and provided with bore sleeves (10) cast-in substantially centrally inside the hollow spoke (4), the bore sleeves (10) being provided with radially extending reinforcement ribs (11), and in the region of the core openings (7) the wheel centre member (2) is provided with at least one reinforcement member (14) between opposite walls (16, 17) of each hollow spoke (4).

2. A wheel according to Claim 1, **characterized in that** the reinforcement member (14) comprises two cylindrically cast pins (15) extending parallel to the wheel axis (9) and spaced from each other and situated respectively on both sides of a transverse plane (**X-X**) of the wheel passing through the reinforcement rib (11).

3. A wheel according to Claim 1 or 2, **characterized in that** a spacing is provided in each case between the walls (16, 17) bounding the hollow ribs (4) laterally and the pins (15).

4. A wheel according to Claims 1, 2 or 3, **characterized in that** the reinforcement ribs (11) and the bore sleeves (10) have an equal wall thickness, and the ribs (11) extend substantially over a third of the length of the hollow spokes (4).

5. A wheel according to Claim 1, **characterized in that** the pins (15) are arranged substantially on the diameter of the inner weld ring (20).

## Revendications

1. Roue (1) comportant un croisillon coulé (2), qui comprend plusieurs rayons creux (4) et qui est assemblé, par une soudure, en particulier une soudure par friction à un anneau de jante (3), et dans laquelle les rayons creux (4) présentent, dans la région du pourtour extérieur, des ouvertures de noyau (7) pour un noyau en sable et les ouvertures sont dirigées vers l'anneau de jante, caractérisée en ce que le croisillon (2) de la roue présente des perçages de vis (10a), qui sont disposés concentriquement à une ouverture de roue (8) centrée, et qui sont pourvus de douilles de perçage (10) venus de coulée a peu près au milieu a l'intérieur du rayon creux (4), avec des nervures de renfort (11) s'étendant radialement, et le croisillon (2) de la roue présente, dans la région des ouvertures de noyau (7), au moins un élément de renfort (14) entre les parois (16, 17) opposées de chaque rayon creux (4).

2. Roue selon la revendication 1, caractérisée en ce que l'élément de renfort (14) est constitué de deux tenons (15) coulés en forme cylindrique, qui s'étendent parallèlement a l'axe (9) de la roue et qui sont disposés a distance l'un de l'autre et se situent de part et d'autre d'un plan transversal de roue (X-X), défini par la nervure de renfort (11).

3. Roue selon la revendication 1 ou 2, caractérisée en ce qu'un intervalle est prévu entre les parois (16, 17) limitant latéralement les rayons creux(4) et les tenons (15).

4. Roue selon la revendication 1, 2 ou 3, caractérisée en ce que les nervures de renfort (11) et les douilles de perçage (10) présentent une même épaisseur de paroi et les nervures (11) s'étendent approximativement sur un 1/3 de la longueur des rayons creux (4).

5. Roue selon la revendication 1, caractérisée en ce que les tenons (15) sont disposés a peu près sur une circonférence de même diamètre que l'anneau de soudage (20) intérieur.
